# FASCICULE DE BREVET EUROPEEN

(11) **EP 1 554 131 B1**
(45) Date de publication et mention de la délivrance du brevet: **14.12.2011**
(21) Numéro de dépôt: 03757928.1
(22) Date de dépôt: 09.10.2003
(51) Int. Cl.: B60C 9/20, B60C 9/28

(54) **PNEUMATIQUE POUR ENGIN LOURD**
LKW-REIFEN
HEAVY DUTY TYRE

(30) Priorité: 10.10.2002 FR 0212625
(43) Date de publication de la demande: 20.07.2005
(73) Titulaire: Société de Technologie Michelin, 63000 Clermont-Ferrand Cedex 09 (FR); Michelin Recherche et Technique S.A., 1763 Granges-Paccot (CH)
(72) Inventeur: PALGEN, Marie-Claude, F-63200 Riom (FR)
(74) Mandataire: Le Cam, Stéphane Georges Elie
(86) Numéro de dépôt international: PCT/EP2003/011159
(87) Numéro de publication internationale: WO 2004/033234

(56) Documents cités:
- WO-A-99/42306
- WO-A-03/008206
- US-A- 5 111 864

## Description

L'invention concerne un pneumatique à armature de carcasse radiale destiné à équiper un véhicule lourd tel qu'un véhicule de transport ou un engin de « Génie Civil ». Il s'agit notamment d'un pneumatique qui présente une largeur axiale supérieure à 37 pouces.

Un tel pneumatique, destiné généralement à porter de lourdes charges, comprend une armature de carcasse radiale, et une armature de sommet composée d'au moins deux nappes de sommet de travail, formées d'éléments de renforcement inextensibles, croisés d'une nappe à la suivante et faisant avec la direction circonférentielle des angles égaux ou inégaux, et compris entre 10 et 45°.

Les armatures de sommet de pneumatiques radiaux, et plus particulièrement en ce qui concerne les pneumatiques de très grandes dimensions, sont soumises à de grandes déformations, qui engendrent entre les bords de deux nappes croisées des contraintes de cisaillement longitudinal et transversal (le cisaillement longitudinal est plus important que le transversal lorsque les câbles de nappes croisées font avec la direction circonférentielle des angles faibles), en même temps qu'une contrainte de délamination, contrainte radiale ayant tendance à séparer radialement les bords des deux nappes. Lesdites contraintes sont dues en premier lieu à la pression de gonflage du pneumatique, qui fait en sorte que la pression dite de ceinturage entre armature de carcasse et armature de sommet tend à provoquer l'expansion circonférentiellé de ladite armature de sommet ; Lesdites contraintes sont en outre dues à la charge portée par le pneumatique en roulage avec naissance d'une surface de contact entre sol et pneumatique ; Lesdites contraintes sont encore dues à la mise en dérive du pneumatique en roulage. Ces contraintes génèrent des fissures dans le mélange caoutchouteux avoisinant l'extrémité de la nappe la plus courte, fissures qui se propagent dans ledit mélange et qui pénalisent l'endurance d'une armature de sommet, et donc du pneumatique.

Une amélioration nette de l'endurance a été procurée par l'emploi dans l'armature de sommet d'au moins une nappe de sommet de protection ayant une largeur axiale supérieure à la largeur de la nappe de travail' la plus large axialement.

On entend par « axiale », une direction parallèle à l'axe de rotation du pneumatique et par « radiale » une direction coupant l'axe de rotation du pneumatique et perpendiculaire à celui-ci. L'axe de rotation du pneumatique est l'axe autour duquel il tourne en utilisation normale. Le plan médian circonférentiel est un plan perpendiculaire à l'axe de rotation du pneu et qui divise le pneumatique en deux moitiés. Un plan radial est un plan qui contient l'axe de rotation du pneumatique.

Une autre solution telle que décrite dans le brevet FR 2 421 742 consiste à répartir plus favorablement les contraintes génératrices de séparation entre nappes de sommet de travail, consécutives à la mise en dérive du pneumatique, en multipliant le nombre de nappes de travail.

La multiplication des nappes de travail n'est pas sans inconvénient, notamment au centre de l'armature de sommet où le nombre de nappes influe directement sur la rigidité de flexion du sommet du pneumatique. Lorsque cette rigidité augmente, il s'ensuit que des chocs intervenant sur le sommet du pneumatique, tels que notamment le passage sur des cailloux de grandes dimensions, peuvent conduire à un endommagement irrémédiable du pneumatique, du fait de cette rigidité accrue.

La demande de brevet WO 00/54992 a encore proposé pour éviter cet inconvénient de réaliser une armature de sommet de travail constituée d'au moins trois nappes de travail continues et d'au moins une demi-nappe, de chaque côté du plan médian circonférentiel, disposée entre les bords d'au moins deux nappes de travail continues radialement adjacentes et dont la particularité est notamment de présenter un angle avec la direction circonférentielle supérieur à 25° et supérieur d'une quantité comprise entre 5° et 15° au plus grand des angles des nappes de travail continues. Les résultats obtenus avec ce type d'architecture ont été tout à fait satisfaisants pour les dimensions de pneumatiques testées.

Le brevet US 5111864A décrit une armature de sommet de pneumatique selon le préambule de la revendication 1 comprenant une pluralité de nappes de sommet de travail, au moins une nappe de protection et au moins deux demi-nappes auxiliaires de protection s'étendant axialement à l'extérieur des nappes de sommet de travail. Les demi-nappes auxiliaires de protection sont disposées selon la direction principale de déformation des éléments de renforcement métalliques des nappes de sommet de travail pour supporter et absorber les déformations dans cette direction et donc pour améliorer la résistance à la séparation des nappes de sommet de travail. Les éléments de renforcement des demi- nappes auxiliaires de protection sont des renforts organiques tels que des renforts en nylon, ou des renforts métalliques.

Dans leurs études et notamment durant l'étude de la réalisation de pneumatiques de dimensions plus importantes, notamment dont la largeur axiale est supérieure à 50 pouces, les inventeurs se sont donnés pour mission de définir une architecture de sommet de pneumatiques pour des engins lourds permettant d'obtenir une endurance satisfaisante notamment en améliorant les rigidités circonférentielle et transversale afin de limiter les contraintes de cisaillement et en conservant une souplesse du sommet.

Ce but a été atteint selon l'invention par un pneumatique pour engin lourd, selon la revendication 1.

Un pneumatique tel qu'il vient d'être défini selon l'invention, c'est-à-dire possédant une armature de sommet telle que décrite permet d'améliorer l'endurance des pneumatiques pour véhicule lourd. Il s'avère en effet que les architectures proposées réduisent les contraintes de cisaillement tout en conservant la souplesse du pneumatique, particulièrement à son sommet, permettant d'obtenir une bonne résistance aux chocs, ce qui favorise encore l'endurance du pneumatique.

Selon un mode de réalisation préféré de l'invention, les nappes continues de sommet de travail, formées des éléments de renforcement orientés avec les angles α, α', sont radialement les plus proches de l'armature de carcasse, la nappe la moins large étant de préférence la plus proche de la nappe radialement extérieure de l'armature de carcasse.

Le recouvrement des extrémités des nappes de sommet continues par les demi-nappes permet d'améliorer la répartition des efforts dans l'ensemble de l'armature sommet en optimisant les couplages des nappes. Ce couplage est obtenu d'une part entre les nappes continues et les demi-nappes de sommet de travail et d'autre part entre les différentes demi-nappes de sommet de travail.

Avantageusement encore, les éléments de renforcement d'une des demi-nappes ont un angle supérieur d'au moins 10°- au plus petit des angles α, α'. Une telle nappe permet notamment de limiter le cisaillement entre les renforts de ladite nappe et le cisaillement avec les gommes entourant la dite nappe et ainsi de limiter les risques de clivage entre les nappes. Cette demi-nappe est avantageusement celle dont l'extrémité axialement intérieure est axialement la plus à l'extérieur ; de préférence encore, cette demi-nappe est la demi-nappe radialement la plus à l'extérieur, les zones de risque de clivage se trouvant au niveau des extrémités axialement extérieures des nappes et des extrémités les plus proches de la bande de roulement.

Selon une réalisation préférée de l'invention, pour améliorer la rigidité circonférentielle du pneumatique tout en augmentant la rigidité transversale, les éléments de renforcement des demi-nappes sont croisés d'une nappe à la suivante.

De façon connue en soi, notamment pour améliorer la résistance du pneumatique aux coupures et perforations, l'armature de sommet de travail est complétée par une armature de protection. Celle-ci est avantageusement composée d'au moins deux nappes d'éléments de renforcement métalliques élastiques. Des variantes de réalisation de l'invention prévoient des nappes de protection constituées de bandelettes se recouvrant partiellement. Quel que soit le type de nappes de protection utilisé, les renforts élastiques utilisés peuvent être des éléments disposés de manière rectiligne ou sous forme sinusoïdale.

Au moins l'une desdites nappes de protection, préférentiellement la nappe radialement intérieure a une largeur axiale plus grande que la plus grande largeur axiale des nappes de travail continues. Avantageusement encore, ladite nappe de protection recouvre l'ensemble des nappes de travail continues et des demi-nappes de travail.

Selon une variante avantageuse de l'invention, la nappe de protection radialement extérieure présente une extrémité axialement extérieure comprise entre les extrémités axialement extérieures de la demi-nappe s'étendant axialement le plus vers l'extérieur et la demi-nappe s'étendant axialement le moins vers l'extérieur. Avantageusement encore, la nappe de protection radialement extérieure présente une extrémité axialement extérieure comprise entre les extrémités axialement extérieures les deux demi-nappes s'étendant axialement le moins vers l'extérieur.

De préférence encore, les éléments de renforcement des nappes de protection sont croisés entre eux.

Dans la partie centrale du sommet du pneumatique, l'armature de protection peut encore être complétée par un bloc complémentaire de protection radialement intercalé entre l'armature de travail et l'armature de protection. En d'autres termes, ce bloc complémentaire de protection comble la zone comprise entre les demi-nappes et radialement intérieure aux nappes de protections. Ce bloc complémentaire de protection peut être constitué d'un bloc de caoutchouc et/ou d'une nappe élastique dont les éléments de renforcement présentent un angle compris entre 20 et 90° et de préférence supérieur à l'angle des éléments de renforcement de la nappe de protection radialement intérieure. Un tel bloc complémentaire de protection complète avantageusement la fonction de protection contre les éventuelles perforations.

D'autres détails et caractéristiques avantageux de l'invention ressortiront ci-après de la description d'exemples de réalisation de l'invention en référence aux figures 1 à 5 qui représentent :
- figure1, un schéma vu en coupe radiale d'un pneumatique de Génie Civil,
- figure 2, une représentation schématique vue en coupe radiale d'une première architecture de sommet selon l'invention,
- figure 3, une représentation schématique vue en coupe radiale d'une seconde architecture de sommet selon l'invention
- figure 4, une représentation schématique vue en coupe radiale d'une troisième architecture de sommet selon l'invention,
- figure 5, une représentation schématique vue en coupe radiale d'une quatrième architecture de sommet selon l'invention,
- figure 6, une représentation schématique vue en coupe radiale d'une cinquième architecture de sommet selon l'invention.

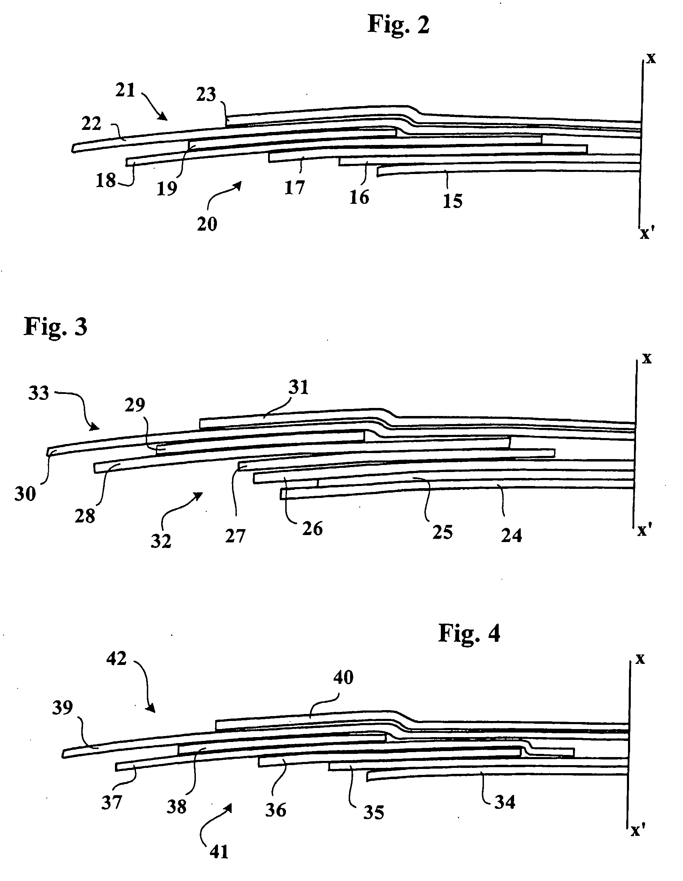

Les figures ne sont pas représentées à l'échelle pour en simplifier la compréhension. Les figures 2 à 6 ne représentent que la moitié des architectures qui se prolongent de manière symétrique par rapport à l'axe XX' qui représente le plan médian circonférentiel d'un pneumatique.

Les valeurs dimensionnelles qui sont données sont des valeurs théoriques, c'est-à-dire qu'il s'agit des valeurs de consigne lors de la fabrication des pneumatiques ; les valeurs réelles peuvent être légèrement différentes notamment du fait de l'incertitude liée au procédé de fabrication pour ce type de pneumatiques.

En outre, concernant les angles des renforts des nappes, les valeurs données sont les valeurs minimales c'est-à-dire les valeurs correspondant à la zone d'une nappe la plus proche de l'axe médian du pneumatique. En effet, l'angle desdits renforts varie selon la direction axiale du pneumatique notamment du fait du galbe de celui-ci.

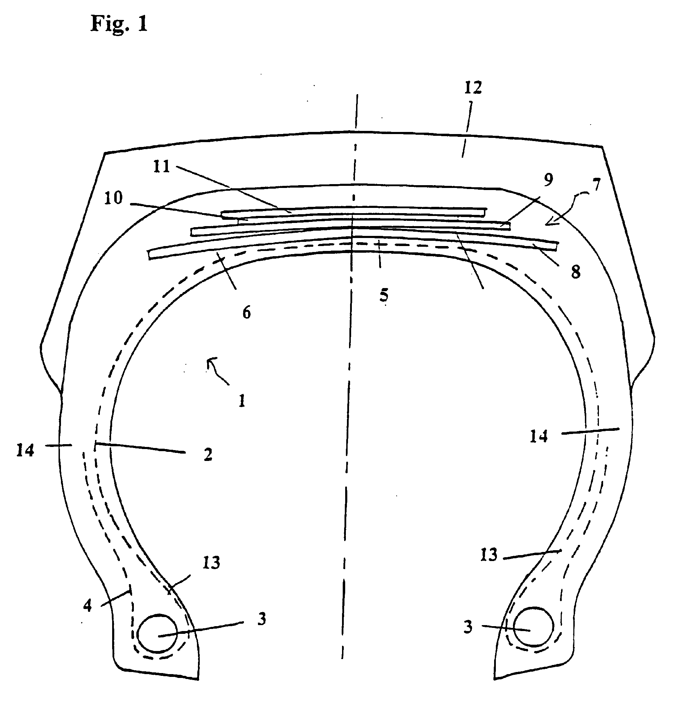

Sur la figure 1, est représentée de manière schématique une coupe radiale d'un pneumatique 1 habituellement utilisé pour des engins de Génie Civil.

Ce pneumatique 1 est un pneumatique de grande dimension dont le rapport de forme H/S est 0,80, H étant la hauteur du pneumatique sur jante et S la largeur axiale maximale du pneumatique, lorsque ce dernier est monté sur sa jante de service et gonflé à sa pression recommandée.

Ce pneumatique 1 comprend une armature de carcasse 2 composée d'une nappe de câbles métalliques inextensibles en acier, ancrée dans chaque bourrelet à une tringle 3 pour former un retournement 4 dont l'extrémité est sensiblement située au niveau de la plus grande largeur axiale de l'armature de carcasse 2. L'armature de carcasse 2 est surmontée radialement de couches 5 et de profilés de mélange caoutchouteux 6, puis d'une armature de sommet 7. Ladite armature de sommet 7 est habituellement constituée, dans le cas de la figure 1, d'une part de deux nappes 8, 9 dites de travail et d'autre part de deux nappes de protection 10, 11. Les nappes de travail 8, 9 sont elles-mêmes constituées de câbles inextensibles en acier, parallèles entre eux dans chaque nappe 8, 9, et croisés d'une nappe à la suivante en faisant avec la direction circonférentielle des angles pouvant être compris entre 15° et 40°. Les nappes de protection 10, 11 sont généralement constituées de câbles métalliques en acier élastiques, parallèles entre eux dans chaque nappe 10, 11 et croisés entre eux d'une nappe 10 à la suivante 11 en faisant des angles pouvant être compris entre 15 et 45°. Les câbles de la nappe de travail radialement extérieure 9 sont usuellement croisés avec les câbles de la nappe de protection 10 radialement intérieure. L'armature de sommet est enfin surmontée d'une bande de roulement 12 qui est réunie aux deux bourrelets 13 par les deux flancs 14.

Sur la figure 2, on a représenté de manière schématique en coupe radiale un empilement, selon l'invention, de nappes 15 à 19 constituant une armature de sommet de travail 20 d'un pneumatique surmontée d'une armature de protection 21. L'armature de carcasse et les différentes zones de mélange caoutchouteux ne sont pas représentées sur cette figure 2 et les suivantes pour simplifier la compréhension de l'invention.

L'armature de travail 20 comprend ainsi en premier lieu deux nappes axialement continues 15 et 16. Ces nappes présentent des largeurs théoriques respectives L₁₅, L₁₆ égales à 0,23S₀ et 0,25S₀, S₀ étant la largeur maximale axiale de l'armature de carcasse, lorsque ce dernier est monté sur sa jante de service et gonflé à sa pression recommandée.

Ces deux nappes continues de travail sont formées de câbles métalliques inextensibles parallèles entre eux dans chaque nappe 15 et 16 et croisés d'une nappe 15 à la suivante 16, en faisant avec la direction circonférentielle du pneumatique des angles théoriques minimums α₁₅, α₁₆, respectivement égaux à - 21° et + 21 °.

L'armature de sommet de travail 20 est ensuite complétée radialement par une superposition de trois demi-nappes 17, 18, et 19. Ces trois demi-nappes se retrouvent, comme expliqué précédemment, de manière symétrique par rapport au plan médian circonférentiel XX' sur la partie non représentée de l'empilement du pneumatique. Ces trois demi-nappes comportent également des câbles métalliques inextensibles parallèles entre eux et croisés d'une demi-nappe à la suivante avec des angles théoriques minimums β₁₉, β₂₀, et β₂₁ respectivement égaux à - 15°, + 18° et - 34°.

La distance axiale théorique qui sépare le plan médian circonférentiel de l'extrémité intérieure de la demi-nappe 17, la moins éloignée dudit plan médian circonférentiel, est égale à 0,03S₀.

Les deux autres demi-nappes 18, 19 sont mises en place de sorte que les distances axiales théoriques qui séparent le plan médian circonférentiel des extrémités intérieures des deux autres demi-nappes 18, 19 sont respectivement égales à 0,08 S₀ et 0,20 S₀.

Les trois demi-nappes 17, 18, 19 s'étendent axialement plus à l'extérieure que la nappe continue de travail 16 la plus large axialement des nappes de travail continues et lesdites trois demi-nappes recouvrent, radialement, les extrémités axialement extérieures des deux nappes de sommet de travail continues 15, 16.

La demi-nappe 18, s'étendant axialement le plus vers l'extérieur est positionnée radialement entre les deux autres demi-nappes 17, 19 et elle est en contact avec lesdites deux autres demi-nappes 17, 19.

Par ailleurs, selon cette réalisation de la figure 2, la demi-nappe 17, qui est la seule à être directement au contact d'une nappe de travail continue 16 comporte des câbles qui sont croisés avec ceux de ladite nappe continue 16.

Les zones de recouvrement entre les demi-nappes 17, 18, 19 et les nappes de travail continues 15, 16, y compris celle entre la demi-nappe 19 et la nappe continue de travail 15 la moins étendue axialement, sont suffisamment importantes pour assurer une continuité des efforts.

L'armature de protection 21, qui couvre radialement l'armature de sommet de travail 20, est formée de deux nappes 22, 23 comprenant des câbles en acier élastiques. Sont dits élastiques des câbles présentant sous une force de traction égale à la charge de rupture un allongement relatif au moins égal à 4%, alors que des câbles sont dits inextensibles lorsque leur allongement relatif, mesuré pour 10% de la force de rupture, est inférieur à 0,2%. Les câbles desdites deux nappes sont croisés d'une nappe 22 à l'autre 23 en faisant avec la direction circonférentielle des angles théoriques minimums respectivement égaux à -24° et +24°. Les câbles de la nappe de protection 22 la plus proche radialement de l'armature de travail sont croisés avec les câbles de la demi-nappe de travail 19 la plus éloignée radialement de l'armature de carcasse.

La largeur axiale de la nappe de protection 22 la plus large est telle qu'elle recouvre la largeur axiale de l'armature de travail 20 ; c'est-à-dire qu'elle couvre radialement selon son étendue axiale l'ensemble des nappes de travail. En d'autres termes, l'extrémité de la nappe de protection 22 la plus large est axialement à l'extérieur de la demi-nappe 18.

L'extrémité axialement extérieure de la nappe de protection 23 la moins large est comprise entre les extrémités axialement extérieures des demi-nappes 17, 19 s'étendant axialement le moins vers l'extérieur.

L'invention prévoit selon d'autres variantes de réalisation d'inverser l'ordre radial des deux nappes de protection, les câbles desdites nappes demeurant croisés entres eux. Par inversion de l'ordre des deux nappes de protection selon l'invention, il faut comprendre que l'invention prévoit d'inverser les largeurs et/ou les angles desdites nappes de protection. En d'autres termes, la nappe de protection radialement intérieure peut comporter des câbles orientés dans le sens des câbles de la demi-nappe de travail 19 la plus éloignée radialement de l'armature de carcasse. Par ailleurs, la nappe de protection radialement intérieure peut être la nappe de protection axialement la plus étroite.

La figure 3 illustre une représentation schématique vue en coupe radiale d'une seconde architecture d'armature de sommet selon l'invention. Selon cette seconde illustration de l'invention, l'empilement comporte des nappes 24 à 29 constituant une armature de sommet de travail 32 d'un pneumatique surmontée d'une armature de protection 33.

L'armature de sommet de travail 32 comprend trois nappes axialement continues 24, 25 et 26. Ces nappes présentent des largeurs théoriques respectives L₂₄, L₂₅, L₂₆ égales à 0,30S₀ et 0,25S₀, 0,40S₀, S₀ étant comme énoncé précédemment la largeur maximale axiale de l'armature de carcasse, lorsque ce dernier est monté sur sa jante de service et gonflé à sa pression recommandée.

Ces trois nappes continues de travail sont formées de câbles métalliques inextensibles parallèles entre eux dans chaque nappe 24 à 26 et croisés d'une nappe à la suivante en faisant avec la direction circonférentielle du pneumatique des angles théoriques minimums α₂₄, α₂₅ et α₂₆, respectivement égaux à +18°, -21 °, +21 °.

L'armature de sommet de travail 32 est ensuite complétée radialement par une superposition de trois demi-nappes 27, 28, 29. Ces trois demi-nappes se retrouvent comme précédemment de manière symétrique par rapport au plan médian circonférentiel sur la partie non représentée de l'empilement du pneumatique. Ces trois demi-nappes comportent également des câbles métalliques inextensibles parallèles entre eux et croisés d'une nappe à la suivante avec des angles théoriques minimums β₂₇, β₂₈, β₂₉ respectivement égaux à - 15°, + 18° et - 34°.

La distance axiale théorique qui sépare le plan médian circonférentiel de l'extrémité intérieure de la demi-nappe 27, la moins éloignée dudit plan médian circonférentiel, est égale à 0,10S₀.

Les deux autres demi-nappes 28, 29 sont mises en place de sorte que les distances axiales théoriques qui séparent le plan médian circonférentiel des extrémités intérieures des deux autres demi-nappes 28, 29 sont respectivement égales à 0,13 S₀ et 0,20 S₀.

L'armature de protection 33, qui couvre radialement l'armature de sommet de travail 32 est identique à celle de la figure 2 et est constituée des nappes 30, 31.

En comparaison de la figure 2, l'architecture de la figure 3 propose trois nappes de travail continues 24, 25, 26. Cette différence permet d'augmenter le frettage au centre du pneumatique. La souplesse du sommet au centre est réduite selon cette représentation par le fait que les demi-nappes 27, 28, 29 sont plus éloignées du plan médian circonférentiel que ne le sont les demi-nappes 17, 18, 19 sur la figure 2. La souplesse du sommet au centre obtenue selon l'architecture d'armature de sommet de la figure 3 est tout de même inférieure à celle obtenue selon l'architecture d'armature de sommet de la figure 2.

La figure 4 illustre une représentation schématique vue en coupe radiale d'une troisième architecture d'armature de sommet selon l'invention. Selon cette troisième illustration de l'invention, l'empilement comporte des nappes 34 à 38 constituant une armature de sommet de travail 41 d'un pneumatique surmontée d'une armature de protection 42.

L'armature de sommet de travail 41 comprend deux nappes axialement continues 34, 35. Ces nappes présentent des largeurs théoriques respectives L₃₄, L₃₅ égales à 0,23S₀ et 0,25S₀, S₀ étant comme énoncé précédemment la largeur maximale axiale de l'armature de carcasse, lorsque ce dernier est monté sur sa jante de service et gonflé à sa pression recommandée.

Ces deux nappes continues de travail 34, 35 sont formées de câbles métalliques inextensibles parallèles entre eux dans chaque nappe et croisés d'une nappe à la suivante en faisant avec la direction circonférentielle du pneumatique des angles théoriques minimums α₃₄, α₃₅ respectivement égaux à -21°, +21 °.

L'armature de sommet de travail 41 est ensuite complétée radialement par une superposition de trois demi-nappes 36, 37, 38. Ces trois demi-nappes se retrouvent comme précédemment de manière symétrique par rapport au plan médian circonférentiel sur la partie non représentée de l'empilement du pneumatique. Ces trois demi-nappes comportent également des câbles métalliques inextensibles parallèles entre eux et croisés de la nappe 36 à la nappe 38 avec des angles théoriques minimums β₃₆, β₃₇, β₃₈ respectivement égaux à - -15°, + 18° et - 34°.

La distance axiale théorique qui sépare le plan médian circonférentiel de l'extrémité intérieure de la demi-nappe 37, la moins éloignée dudit plan médian circonférentiel, est égale à 0,05S₀.

Les deux autres demi-nappes 36, 38 sont mises en place de sorte que les distances axiales théoriques qui séparent le plan médian circonférentiel des extrémités intérieures desdites deux autres demi-nappes 36, 39 sont respectivement égales à 0,10 S₀ et 0,20 S₀.

L'armature de protection 42, qui couvre radialement l'armature de sommet de travail 41 est identique à celle des figures précédentes et est constituée des nappes 39, 40.

La différence d'architecture de la figure 4 par rapport à la figure 2 a notamment pour effet d'augmenter la surface de couplage entre les nappes de travail continues et la demi-nappes de travail 37, s'étendant axialement le plus vers l'extérieur. Cette augmentation des surfaces de couplage entre les nappes permet de conférer au pneumatique une plus grande résistance aux efforts de dérives.

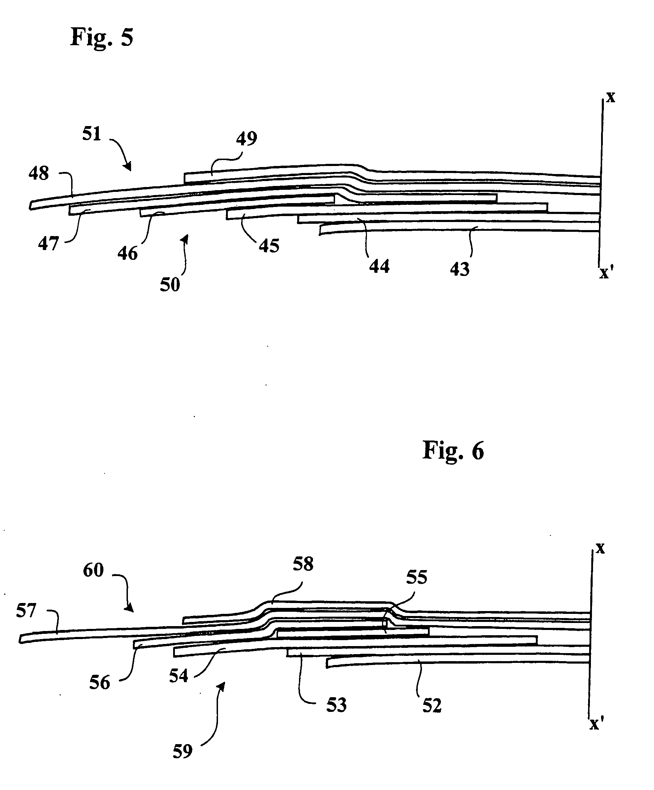

La figure 5 illustre une représentation schématique vue en coupe radiale d'une quatrième architecture d'armature de sommet selon l'invention. Selon cette quatrième illustration de l'invention, l'empilement comporte des nappes 43 à 47 constituant une armature de sommet de travail 50 d'un pneumatique surmontée d'une armature de protection 51.

L'armature de sommet de travail 50 comprend deux nappes axialement continues 43, 44. Ces nappes présentent des largeurs théoriques respectives L₄₃, L₄₄ égales à 0,23S₀ et 0,25S₀, S₀ étant comme énoncé précédemment la largeur maximale axiale de l'armature de carcasse, lorsque ce dernier est monté sur sa jante de service et gonflé à sa pression recommandée.

Ces deux nappes continues de travail 43, 44 sont formées de câbles métalliques inextensibles parallèles entre eux dans chaque nappe et croisés d'une nappe à la suivante en faisant avec la direction circonférentielle du pneumatique des angles théoriques minimums α₄₃, α₄₄ respectivement égaux à -21°, +21°.

L'armature de sommet de travail 50 est ensuite complétée radialement par une superposition de trois demi-nappes 45, 46, 47. Ces trois demi-nappes se retrouvent comme précédemment de manière symétrique par rapport au plan médian circonférentiel sur la partie non représentée de l'empilement du pneumatique. Ces trois demi-nappes comportent également des câbles métalliques inextensibles parallèles entre eux et croisés d'une nappe à la suivante avec des angles théoriques minimums β₄₅, β₄₆, β₄₇ respectivement égaux à - 15°, + 34° et - 18°.

La distance axiale théorique qui sépare le plan médian circonférentiel de l'extrémité intérieure de la demi-nappe 45, la moins éloignée dudit plan médian circonférentiel, est égale à 0,05S₀.

Les deux autres demi-nappes 46, 47 sont mises en place de sorte que les distances axiales théoriques qui séparent le plan médian circonférentiel des extrémités intérieures desdites deux autres demi-nappes 46, 47 sont respectivement égales à 0,20 S₀ et 0,10 S₀.

L'armature de protection 51, qui couvre radialement l'armature de sommet de travail 50 est identique à celle des figures précédentes et est constituée des nappes 48, 49.

L'invention prévoit avantageusement selon cette réalisation la mise en place d'une gomme de découplage entre la demi-nappe 47 et la nappe de protection 48 car les extrémités des câbles de la demi-nappe 47 sont dans une zone fortement sollicitée.

La différence d'architecture de la figure 5 par rapport aux représentations précédentes permet de réaliser un couplage entre les demi-nappes de travail deux à deux. Une telle architecture permet notamment d'améliorer la tenue des demi-nappes entre-elles.

La figure 6 illustre une représentation schématique vue en coupe radiale d'une cinquième architecture d'armature de sommet selon l'invention. Selon cette cinquième illustration de l'invention, l'empilement comporte des nappes 52 à 56 constituant une armature de sommet de travail 59 d'un pneumatique surmontée d'une armature de protection 60.

L'armature de sommet de travail 59 comprend deux nappes axialement continues 52, 53. Ces nappes présentent des largeurs théoriques respectives L₅₂, L₅₃ égales à 0,23S₀ et 0,25S₀, S₀ étant comme énoncé précédemment la largeur maximale axiale de l'armature de carcasse, lorsque ce dernier est monté sur sa jante de service et gonflé à sa pression recommandée.

Ces deux nappes continues de travail 52, 53 sont formées de câbles métalliques inextensibles parallèles entre eux dans chaque nappe et croisés d'une nappe à la suivante en faisant avec la direction circonférentielle du pneumatique des angles théoriques minimums α₅₂, α₅₃ respectivement égaux à -21 °, +21 °.

L'armature de sommet de travail 59 est ensuite complétée radialement par une superposition de trois demi-nappes 54, 55, 56. Ces trois demi-nappes se retrouvent comme précédemment de manière symétrique par rapport au plan médian circonférentiel sur la partie non représentée de l'empilement du pneumatique. Ces trois demi-nappes comportent également des câbles métalliques inextensibles parallèles entre eux et croisés d'une nappe à la suivante avec des angles théoriques minimums β₅₄, β₅₅, β₅₆ respectivement égaux à - 15°, + 20° et - 32°.

La distance axiale théorique qui sépare le plan médian circonférentiel de l'extrémité intérieure de la demi-nappe 54, la moins éloignée dudit plan médian circonférentiel, est égale à 0,05S₀.

Les deux autres demi-nappes 55, 56 sont mises en place de sorte que les distances axiales théoriques qui séparent le plan médian circonférentiel des extrémités intérieures desdites deux autres demi-nappes 55, 56 sont respectivement égales à 0,15 S₀ et 0,18 S₀.

L'armature de protection 60, qui couvre radialement l'armature de sommet de travail 50 est identique à celle des figures précédentes et est constituée des nappes 57, 58.

La différence d'architecture de la figure 6 par rapport aux représentations précédentes permet, comme dans le cas de l'architecture représentée sur la figure 5, de réaliser un couplage entre les demi-nappes de travail deux à deux. Une telle architecture permet donc notamment, comme dans le cas de la figure 5, d'améliorer la tenue des demi-nappes entre-elles.

L'interprétation de ces exemples ne doit pas se faire de façon limitative, les variantes de réalisation étant nombreuses ; il est notamment possible de prévoir d'intercaler des demi-nappes de travail entre des nappes de travail continues. Il est encore possible d'avoir un nombre de nappes de travail continues plus importants. Il est également envisageable d'inverser l'orientation des câbles des nappes de protection.

## Revendications

1. Pneumatique (1) pour engin lourd, comprenant une armature de carcasse radiale (2) surmontée radialement d'une armature de sommet de travail (20), composée d'au moins deux nappes continues de sommet de travail (15, 16) formées d'éléments de renforcement métalliques inextensibles croisés d'une nappe de sommet de travail à la suivante en faisant avec la direction circonférentielle des angles α, α' compris entre 10 et 35° **caractérisé en ce que** l'armature de sommet de travail (20) est complétée de chaque côté du plan médian circonférentiel par au moins trois demi-nappes de sommet de travail (17, 18, 19), formées d'éléments de renforcement métalliques inextensibles, faisant avec la direction circonférentielle des angles β, β', β" compris entre 10 et 40°, **en ce que** la demi-nappe de sommet de travail (18) s'étendant axialement le plus vers l'extérieur est au contact d'au moins deux autres demi-nappes de sommet de travail (17, 19) et **en ce que** les trois demi-nappes de sommet de travail (17, 18, 19) recouvrent, radialement, les extrémités axialement extérieures d'au moins deux nappes de sommet de travail continues (15, 16).

2. Pneumatique selon la revendication 1 **caractérisé en ce que** les nappes continues de sommet de travail (15, 16), formées des éléments de renforcement métalliques inextensibles orientés avec les angles α, α', sont radialement les plus proches de l'armature de carcasse radiale (2), la nappe de sommet de travail la moins large (15) étant de préférence la plus proche de la nappe radialement extérieure de l'armature de carcasse radiale.

3. Pneumatique selon l'une des revendication 1 ou 2 **caractérisé en ce que** les éléments de renforcement d'une des demi-nappes de sommet de travail (17, 18, 19) ont un angle supérieur d'au moins 10° au plus petit des angles α, α'.

4. Pneumatique selon l'une de revendications 1 à 3 **caractérisé en ce que** les éléments de renforcement des demi-nappes de sommet de travail (17, 18, 19) sont croisés d'une demi-nappe de sommet de travail à la suivante.

5. Pneumatique selon l'une des revendications 1 à 4 **caractérisé en ce que** l'armature de sommet de travail (20) est complétée par une armature de protection (21) composée d'au moins deux nappes de protection (22, 23) formées d'éléments de renforcement métalliques élastiques.

6. Pneumatique selon la revendication 5 **caractérisé en ce qu'**une nappe de protection (22, 23) présente une largeur axiale supérieure à la largeur de la nappe de sommet de travail la plus large axialement (16).

7. Pneumatique selon l'une des revendications 5 ou 6 **caractérisé en ce que** la nappe de protection radialement extérieure (23) présente une extrémité axialement extérieure comprise entre les extrémités axialement extérieures de la demi-nappe de sommet de travail s'étendant axialement le plus vers l'extérieur (18) et la demi-nappe de sommet de travail s'étendant axialement le moins vers l'extérieur (17).

8. Pneumatique selon la revendication 7 **caractérisé en ce que** la nappe de protection radialement extérieure (23) présente une extrémité axialement extérieure comprise entre les extrémités axialement extérieures des deux demi-nappes de sommet de travail s'étendant axialement le moins vers l'extérieur (17, 19).

## Claims

1. Heavy vehicle tyre (1) comprising a radial carcass reinforcement (2) radially surmounted by a working crown reinforcement (20), made up of at least two continuous working crown plies (15, 16) formed of inextensible metal reinforcing elements that are crossed from one working crown ply to the next making angles α, α' of between 10 and 35° with the circumferential direction, **characterized in that** the working crown reinforcement (20) is supplemented on each side of the circumferential mid-plane by at least three working crown half-plies (17, 18, 19) formed of inextensible metal reinforcing elements that make angles β, β', β" of between 10 and 40° with the circumferential direction, **in that** the working crown half-ply (18) that extends axially furthest towards the outside is in contact with at least two other working crown half-plies (17, 19), and **in that** the three working crown half-plies (17, 18, 19) radially overlap the axially outer ends of at least two continuous working crown plies (15, 16).

2. Tyre according to Claim 1, **characterized in that** the continuous working crown plies (15, 16) formed of the inextensible metal reinforcing elements oriented at the angles α, α' are radially the closest to the radial carcass reinforcement (2), the narrowest working crown ply (15) preferably being the closest to the radially outer ply of the radial carcass reinforcement.

3. Tyre according to either of Claims 1 or 2, **characterized in that** the reinforcing elements of one of the working crown half-plies (17, 18, 19) are at an angle at least 10° greater than the smallest of the angles α, α'.

4. Tyre according to one of Claims 1 to 3, **characterized in that** the reinforcing elements of the working crown half-plies (17, 18, 19) are crossed from one working crown half-ply to the next.

5. Tyre according to one of Claims 1 to 4, **characterized in that** the working crown reinforcement (20) is supplemented by a protective reinforcement (21) made up of at least two protective plies (22, 23) formed of elastic metal reinforcing elements.

6. Tyre according to Claim 5, **characterized in that** a protective ply (22, 23) has an axial width greater than the width of the axially widest working crown ply (16).

7. Tyre according to either of Claims 5 or 6, **characterized in that** the radially outer protective ply (23) has one axially outer end sandwiched between the axially outer ends of the working crown half-ply that extends axially furthest towards the outside (18) and the working crown half-ply that extends axially least towards the outside (17).

8. Tyre according to Claim 7, **characterized in that** the radially outer protective ply (23) has an axially outer end sandwiched between the axially outer ends of the two working crown half-plies that extend axially the least towards the outside (17, 19).

## Patentansprüche

1. Luftreifen (1) für schweres Gerät, der eine radiale Karkassenbewehrung (2) enthält, über der radial eine Arbeitsscheitelbewehrung (20) angeordnet ist, die aus mindestens zwei durchgehenden Arbeitsscheitellagen (15, 16) besteht, die von nicht dehnbaren metallischen Verstärkungselementen gebildet werden, welche sich von einer Arbeitsscheitellage zur anderen kreuzen, indem sie mit der Umfangsrichtung Winkel α, α' bilden, die zwischen 10 und 35° liegen, **dadurch gekennzeichnet, dass** die Arbeitsscheitelbewehrung (20) auf jeder Seite der Umfangsmittelebene durch mindestens drei Arbeitsscheitel-Halblagen (17, 18, 19) vervollständigt wird, die von nicht dehnbaren metallischen Verstärkungselementen gebildet werden, welche mit der Umfangsrichtung Winkel β, β', β" bilden, die zwischen 10 und 40° liegen, dass die Arbeitsscheitel-Halblage (18), die sich axial am weitesten nach außen erstreckt, mit mindestens zwei anderen Arbeitsscheitel-Halblagen (17, 19) in Kontakt ist, und dass die drei Arbeitsscheitel-Halblagen (17, 18, 19) radial die axial äußeren Enden von mindestens zwei durchgehenden Arbeitsscheitellagen (15, 16) bedecken.

2. Luftreifen nach Anspruch 1, **dadurch gekennzeichnet, dass** die durchgehenden Arbeitsscheitellagen (15, 16), die von nicht dehnbaren metallischen Verstärkungselementen gebildet werden, welche mit den Winkeln α, α' ausgerichtet sind, radial der radialen Karkassenbewehrung (2) am nächsten liegen, wobei die am wenigsten breite Arbeitsscheitellage (15) vorzugsweise der radial äußeren Lage der radialen Karkassenbewehrung am nächsten liegt.

3. Luftreifen nach einem der Ansprüche 1 oder 2, **dadurch gekennzeichnet, dass** die Verstärkungselemente einer der Arbeitsscheitel-Halblagen (17, 18, 19) einen Winkel haben, der um mindestens 10° größer als der kleinste der Winkel α, α' ist.

4. Luftreifen nach einem der Ansprüche 1 bis 3, **dadurch gekennzeichnet, dass** die Verstärkungselemente der Arbeitsscheitel-Halblagen (17, 18, 19) sich von einer Arbeitsscheitel-Halblage zur nächsten kreuzen.

5. Luftreifen nach einem der Ansprüche 1 bis 4, **dadurch gekennzeichnet, dass** die Arbeitsscheitelbewehrung (20) durch eine Schutzbewehrung (21) vervollständigt wird, die aus mindestens zwei Schutzlagen (22, 23) besteht, die von elastischen metallischen Verstärkungselementen gebildet werden.

6. Luftreifen nach Anspruch 5, **dadurch gekennzeichnet, dass** eine Schutzlage (22, 23) eine axiale Breite größer als die Breite der axial breitesten Arbeitsscheitellage (16) aufweist.

7. Luftreifen nach einem der Ansprüche 5 oder 6, **dadurch gekennzeichnet, dass** die radial äußere Schutzlage (23) ein axial äußeres Ende aufweist, das zwischen den axial äußeren Enden der Arbeitsscheitel-Halblage, die sich axial am weitesten nach außen erstreckt (18), und der Arbeitsscheitel-Halblage liegt, die sich axial am wenigsten nach außen erstrecken (17).

8. Luftreifen nach Anspruch 7, **dadurch gekennzeichnet, dass** die radial äußere Schutzlage (23) ein axial äußeres Ende aufweist, das zwischen den axial äußeren Enden der zwei Arbeitsscheitel-Halblagen liegt, die sich axial am wenigsten nach außen erstrecken (17, 19).
